## Europäisches Patentamt

## European Patent Office

## Office européen des brevets

(11) Veröffentlichungsnummer: **0 042 996**
**B1**

(12) # EUROPÄISCHE PATENTSCHRIFT

(45) Veröffentlichungstag der Patentschrift:
**10.04.85**

(51) Int. Cl.⁴: **G 02 B 6/04**

(21) Anmeldenummer: **81104304.1**

(22) Anmeldetag: **04.06.81**

(54) **Selbsttragendes optisches Nachrichtenkabel.**

(30) Priorität: **25.06.80 DE 3023669**

(43) Veröffentlichungstag der Anmeldung:
**06.01.82 Patentblatt 82/1**

(45) Bekanntmachung des Hinweises auf die Patenterteilung:
**10.04.85 Patentblatt 85/15**

(84) Benannte Vertragsstaaten:
**AT FR GB NL**

(56) Entgegenhaltungen:
**DE - A - 2 302 662**
**DE - A - 2 521 659**
**DE - A - 2 818 297**
**DE - B - 2 628 069**

(73) Patentinhaber: **Philips Kommunikations Industrie AG,
Thurn-und-Taxis-Strasse 10, D-8500 Nürnberg 10 (DE)**

(72) Erfinder: **Olejak, Gerhard, Im Wohnpark 17,
D-5010 Bergheim 14 (DE)**
Erfinder: **Krahn, Friedrich, Dr.rer.nat., Brücker Bach 33,
D-5060 Bergisch Gladbach 3 (DE)**

(74) Vertreter: **Meier, Friedrich, Dipl.-Ing. et al, c/o PHILIPS
PATENTVERWALTUNG GMBH
Billstrasse 80 Postfach 10 51 49,
D-2000 Hamburg 28 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein optisches Nachrichtenkabel, mit einer Lichtleitfasern (LLF) enthaltenden Seele und einem mit Abstand aufgebrachten Kunststoffmantel, bei dem die Lichtleitfasern mit Kunststoff-Fäden verseilt sind.

Derartige Kabel werden für die Übertragung von Signalen aller Art verwendet. Die Tatsache, dass die Signalübertragung über elektrisch nichtleitende Adern erfolgt, bietet neue Möglichkeiten der Signalübertragung zwischen Anlageteilen und Anlagen, die unterschiedliches elektrisches Potential führen. Für solche Anwendungsfälle muss auch der unbedingt nötige Schutz der LLF vor mechanischen Beanspruchungen durch elektrisch isolierende Kabelelemente erfolgen.

Bekannt ist ein optisches Kabel, bei dem optische Übertragungselemente auf einen zugfesten Kern aufgeseilt und unter Zwischenlage einer Polsterschicht aus geschäumten Kunststoff mit einem äusseren Kunststoffmantel umgeben sind, bei dem der zugfeste Kern aus einem hochfesten Kunststoff besteht, bei dem jedes optische Übertragungselement von einer mit Abstand aufgebrachten, mechanisch widerstandsfähigen Schutzhülle aus Kunststoff umgeben ist, bei dem auf die den zugfesten Kern aufgeseilten optischen Übertragungselemente eine mehrlagige Bespinnung aus einem Kunststoffband hoher mechanischer Festigkeit aufgebracht ist, auf der die Polsterschicht aus geschäumten Kunststoff angeordnet ist, und bei dem der äussere Kunststoffmantel aus Polyurethan besteht (DE-OS 2 513 724).

Bei diesem bekannten Kabel ist das die in der Kabellängsachse wirkenden Zugkräfte aufnehmende Element in unmittelbarem Kontakt mit den optischen Übertragungselementen angeordnet, während die um die Übertragungselemente herum angeordnete Kabelhülle lediglich zum Schutz gegen quer zur Kabellängsachse gerichtete äussere Einwirkungen dient. Ein sicherer Schutz der optischen Übertragungselemente vor mechanischen Kräften ist bei erhöhten Beanspruchungen nicht sichergestellt.

Bekannt ist ferner ein selbsttragendes Luftkabel, aufgebaut aus wenigstens einem isolierten Leiter, Aufnahmeorganen für die Zugkräfte und einem geschlossenen Kunststoffmantel, bei dem die Aufnahmeorgane für die Zugkräfte aus Zwirnen aus nicht vorimprägnierten Glasseidenfasern bestehen, die in an sich bekannter Weise längslaufend mit Abstand voneinander etwa kreisförmig in einer oder mehreren konzentrischen Lagen um den oder die isolierten Leiter herum im Kunststoffmantel derart angeordnet sind, dass jedes Aufnahmeorgan rundherum vom Mantelwerkstoff umgeben ist (DE-PS 1 640 929).

Dieses bekannte, kostengünstig und gewichtssparend herstellbare Kabel ist für herkömmliche Nachrichtenadern aus isolierten Metalldrähten bestimmt. Die Anwendung der darin enthaltenen Gedanken auf die wesentlich empfindlicheren Lichtleitfasern ist, insbesondere wenn erhöhte Beanspruchungen zu erwarten sind, nicht ohne weiteres möglich.

Schliesslich ist es aus der DE-A 2 302 662 bekannt, Lichtleitfasern zu Bündeln zusammenzufassen und mehrere dieser Bündel zusammen mit hochfesten Zugentlastungselementen aus Metall oder Kunststoff zu verseilen und die verseilten Bündel mit einem Schutzmantel aus Kunststoff unter Einschluss eines Gleitmittels zu umschliessen. Auch diese konstruktive Durchbildung eines Nachrichtenkabels ergibt nicht die erforderliche hohe Zugfestigkeit bei entsprechender Isolation.

Der Erfindung liegt die Aufgabe zugrunde, ein selbsttragendes optisches Nachrichtenkabel zu schaffen, das völlig aus elektrisch nichtleitenden Elementen aufgebaut ist und dennoch grosse Spannweiten erlaubt, also hohe Zugkräfte aufnehmen kann und die darin enthaltenen optischen Übertragungselemente zuverlässig vor mechanischen Beanspruchungen schützen kann.

Diese Aufgabe wird erfindungsgemäss durch ein Kabel mit den kennzeichnenden Merkmalen des Anspruchs 1 gelöst. Ausgestaltungen der Erfindung sind in den Unteransprüchen 2 bis 6 aufgeführt.

Die mit der Erfindung erzielbaren Vorteile bestehen insbesondere darin, dass ein kostengünstig herstellbares, extrem leichtes und Spannweiten bis über 200 m ermöglichendes Kabel geschaffen wurde, das sich auch bei der Verlegung in Hochspannungsanlagen sehr einfach handhaben lässt.

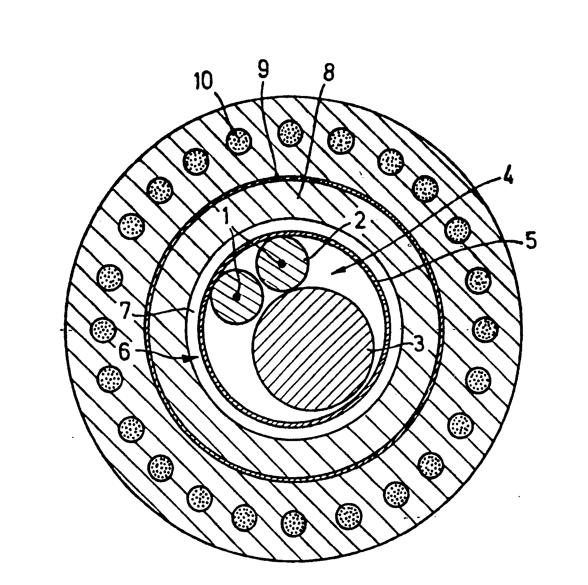

Ein Ausführungsbeispiel der Erfindung ist in der Zeichnung dargestellt und wird im folgenden näher beschrieben.

Die einzige Figur zeigt ein selbsttragendes optisches Nachrichtenkabel schematisch im Querschnitt.

In der Figur sind beispielhaft zwei Lichtleitfasern (LLF) 1 dargestellt, die wie üblich von Schutzhüllen 2 aus Kunststoff umgeben sind. Es können sowohl lose auf den LLF 1 sitzende Hüllen wie auch eine feste Kunststoffbeschichtung verwendet werden. Die LLF 1 mit ihren Schutzhüllen 2 sind mit kurzem Schlag mit einem Faserbündel 3 verseilt, dessen Einzelfasern ebenfalls mit kurzem Schlag miteinander verseilt sind. Unter kurzem Schlag versteht man in der Verseiltechnik eine Verseilung, bei der auf eine Seillänge entsprechend dem 10–15-fachen Seildurchmesser ein Umlauf eines jeden Verseilelementes erfolgt. Ein solches Seil ist weich und biegsam und kann eventuell auftretenden Belastungen gut ausweichen. Ein bevorzugter Werkstoff für die Fäden des Bündels 3 ist Polypropylen. Das aus LLF 1 und dem Faserbündel 3 bestehende Seil 4 ist von mehreren Lagen 5 von Bändern aus einem gut gleitfähigem Kunststoff umwickelt. Ein bevorzugter Werkstoff für die Bänder 5 ist Polyäthylen-Terephthalat. Die aus den genannten Elementen gebildete Kabelseele 6 ist von einem Kunststoffmantel 8 lose derart umgeben, dass zwischen Mantel 8 und Kabelseele 6 ein Abstand 7 verbleibt, der 5 bis 50% des Durchmessers der Seele 6 im unbelasteten Zustand des Kabels beträgt. Durch die beschriebenen Massnahmen entsteht für die Kabelseele 6 eine Sicherheit, dass sie auch bei unter Belastung eventuell auftretenden Durchmesserverringerungen des Kunststoffmantels 8 leicht in diesem beweglich bleibt und allen eventuellen Längenänderungen ausweichen kann. Ein bevorzugter Werkstoff für den Kunststoffmantel 8 ist Polyäthylen hoher Dichte. Innerhalb des Kunststoffmantels 8 ist eine Lage 9 von hochfesten Verstärkungsfasern dargestellt, die mit langem Schlag eingearbeitet ist. Mit langem Schlag wird eine Verseilart bezeichnet, bei der ein Verseilelement einen Umlauf auf einer Seillänge aufweist, die etwa 40 bis 45 Seildurchmessern entspricht. Eine Hülle mit derartig eingearbeiteten Verstärkungsfasern ist in Längsrichtung wenig dehnbar. Diese Eigenschaft wird noch dadurch verbessert, dass als Werkstoff für die hochfesten Verstärkungsfasern 9 ein aromatisches Polyamid verwendet wird, das äusserst geringe Bruchdehnungen aufweist. Als weitere Verstärkung und als mechanischen Schutz gegen äussere Einwirkungen kann der Kabelmantel 8 zusätzlich mehrere Bündel 10 von Glasfasern enthalten. Die Herstellung des Kabelmantels 8 kann nach bekannten Verfahren in einem Arbeitsgang erfolgen.

Ein im Beispiel dargestelltes selbsttragendes optisches Nachrichtenkabel mit einem Aussendurchmesser von etwa 11 mm ist in der Lage, auch unter den schwersten zu erwartenden Bedingungen mit zusätzlichen Wind- und Eislasten Abstände zwischen den Aufhängepunkten von über 200 m sicher zu überbrücken. Selbst bei einer über die Bruchdehnung des Kabelmantels hinausgehenden Verlängerung des Kabelmantels tritt in den LLF keine mechanisch bedingte Zusatzdämpfung oder gar ein Bruch auf. Da alle Kabelelemente aus gut isolierendem Werkstoff bestehen, ist eine Verwendung des Kabels in Hochspannungsanlagen aller Art ohne irgendwelche Einschränkungen möglich.

**Patentansprüche**

1. Optisches Nachrichtenkabel, mit einer Lichtleitfasern enthaltenden Seele und einem mit Abstand aufgebrachten Kunststoffmantel, bei dem die Lichtleitfasern mit Kunststoff-Fäden verseilt sind, dadurch gekennzeichnet, dass

a) die Lichtleitfasern (1) mit kurzem Schlag mit einem Bündel (3) der ebenfalls mit kurzem Schlag verseilten Kunststoff-Fäden verseilt sind,

b) das aus Lichtleitfasern (1) und Fäden (3) bestehende Seil (4) mit einer oder mehreren Lagen von Bändern (5) aus gut gleitfähigem Kunststoff umwickelt ist,

c) der um die aus Lichtleitfasern (1), Fäden (3) und Bändern (5) bestehende Seele (6) aufgebrachte Kunststoffmantel (8) faserverstärkt ist und sein Abstand (7) gegenüber der Seele (6) 5 bis 50% des Durchmessers der Seele (6) beträgt,

d) im Kunststoffmantel (8) mit langem Schlag wenigstens eine Lage (9) von hochfesten Verstärkungsfasern eingearbeitet ist.

2. Optisches Nachrichtenkabel nach Anspruch 1, dadurch gekennzeichnet, dass die Kunststoff-Fäden (3) aus Polypropylen bestehen.

3. Optisches Nachrichtenkabel nach Anspruch 1 oder 2, dadurch gekennzeichnet, dass die Bänder (5) aus Polyäthylen-Terephthalat bestehen.

4. Optisches Nachrichtenkabel nach einem der Ansprüche 1 bis 3, dadurch gekennzeichnet, dass der Kunststoffmantel (8) aus Polyäthylen hoher Dichte besteht.

5. Optisches Nachrichtenkabel nach einem der Ansprüche 1 bis 4, dadurch gekennzeichnet, dass die hochfesten Verstärkungsfasern (9) aus einem aromatischen Polyamid bestehen .

6. Optisches Nachrichtenkabel nach einem der Ansprüche 1 bis 5, dadurch gekennzeichnet, dass im Kunststoffmantel (8) zusätzlich mehrere Bündel (10) von Glasfasern eingearbeitet sind.

**Claims**

1. An optical communication cable having a core comprising optical cable elements and a synthetic resin sheath, in which the optical cable elements are twisted with synthetic resin threads, characterized in that:

a) the optical cable elements (1) are twisted with a short lay with a bundle (3) of the synthetic resin threads also twisted with a short lay,

b) the cable (4) consisting of optical cable elements (1) and threads (3) is enveloped by one or several layers of bands (5) of readily sliding synthetic resin,

c) the synthetic resin sheath (8) provided around the core (6) consisting of optical cable elements (1), threads (3) and bands (5) is fibre-reinforced and its distance (7) with respect to the core (6) is from 5 to 50% of the diameter of the core (6),

d) at least one layer (9) of high-strength reinforcing fibres is processed in the synthetic resin sheath (8) with a long lay

2. An optical communication cable as claimed in Claim 1, characterized in that the synthetic resin threads (3) are of polypropylene.

3. An optical communication cable as claimed in Claim 1 or 2, characterized in that the bands (5) are of polyethylene terephthalate.

4. An optical communication cable as claimed in any of the claims 1 to 3, characterized in that the synthetic resin sheath (8) is high-density polyethylene.

5. An optical communication cable as claimed in any of the claims 1 to 4, characterized in that the high-strength reinforcing fibres (9) consist of an aromatic polyamide.

6. An optical communication element as claimed in any of the claims 1 to 5, characterized in that in addition several bundles (10) of glass fibres are processed in the synthetic resin sheath (8).

**Revendications**

1. Câble d'information optique comportant une âme contenant des fibres photoconductrices et une gaine en matière synthétique appliquée à une certaine distance dans lequel les fibres photoconductrices sont torsadées avec des fils en matière synthétique, caractérisé en ce que

a) les fibres photoconductrices 1 sont tordues à tour court avec un faisceau (3) de fils en matière synthétique également tordus à tour court,

b) le câble (4) constitué par des fibres photoconductrices (1) et des fils (3) est enveloppé d'une ou de plusieurs couches en bandes (5) en matière synthétique pouvant glisser convenablement

c) la gaine en matière synthétique (8) appliquée autour de l'âme (6) constituée par des fibres photoconductrices (1), des fils (3) et des bandes (5) est renforcée en fibres et sa distance (7) par rapport à l'âme (6) est de 5 à 50% du diamètre de l'âme (6),

d) dans la gaine en matière synthétique (8) est appliquée à tour court, au moins une couche (8) en fibres de renfoncement à haute résistance.

2. Câble d'information optique selon la revendication 1, caractérisé en ce que les fils en matière synthétique (3) sont constitués par du polypropylène.

3. Câble d'information optique selon la revendication 1 ou 2, caractérisé en ce que les bandes (5) sont constituées par du polyéthylènetéréphtalate.

4. Câble d'information optique selon l'une des revendications 1 à 3, caractérisé en ce que la gaine en matière synthétique (8) est constituée par du polyéthylène de densité élevée.

5. Câble d'information optique selon l'une des revendications 1 à 3, caractérisé en ce que les fibres de renforcement à haute résistance (9) sont constituées par un polyamide aromatique.

6. Câble d'information optique selon l'une des revendications 1 à 5, caractérisé en ce que dans la gaine en matière synthétique (8) sont appliqués plusieurs faisceaux additionnels (10) en fibres de verre.